# EUROPEAN PATENT SPECIFICATION

(11) **EP 2 841 355 B1**
(45) Date of publication and mention of the grant of the patent: **07.06.2017**
(21) Application number: 13711666.1
(22) Date of filing: 20.03.2013
(51) Int. Cl.: B65D 81/32

(54) **DRINKS CONTAINER AND DRINKS DEVICE**
GETRÄNKEBEHÄLTER UND GETRÄNKEVORRICHTUNG
CONTENEUR DE BOISSONS ET APPAREIL DE PRÉPARATION DE BOISSONS

(30) Priority: 21.03.2012 GB 201204999
(43) Date of publication of application: 04.03.2015
(73) Proprietor: SEB S.A., 69130 Ecully (FR)
(72) Inventor: STONEHOUSE, David, Richard, Cambridge Cambridgeshire CB4 3BS (GB); NELSON, Craig, Harvey, Baldock Hertfordshire SG7 6SU (GB); STEPHENSON, John, Antony, Cambridge Cambridgeshire CB1 3LG (GB); LLOYD, Carys, Eleri, Cambridgeshire CB22 5DU (GB); ROBIN, Michel, François, Marie, CH-1208 Geneva (CH); WILLIAMS, Lawrence, Lee, F-01630 St. Jean de Gonville (FR)
(74) Representative: August & Debouzy avocats
(86) International application number: PCT/EP2013/055844
(87) International publication number: WO 2013/139864

(56) References cited:
- EP-A1- 1 120 377
- EP-A1- 2 281 755
- WO-A1-97/06076
- WO-A1-2005/023268
- DE-C- 373 227
- FR-A1- 2 856 478

## Description

The present invention relates to a method and system for providing drinks and, in particular, for providing a variety of different types of drink requiring respective mixes of components. The present invention also relates to a corresponding drinks container and drinks device.

A variety of different machines are known for providing drinks to a user. In particular, machines are known for mixing components of a drink and dispensing the mixture to a user. Machines are known for mixing a drinks concentrate with carbonated water for providing a carbonated drink. Also, machines, for example for producing a coffee drink, are known for receiving a capsule of a drinks component (for instance coffee), rupturing that capsule and mixing it with water before then dispensing it to the user. Also, systems are known where user receptacles, such as cups, are provided containing components of a drink and water is added to the receptacle to provide the drink to the user.

The present application recognises for the first time problems with these previous arrangements. In particular, earlier arrangements for dispensing a mixed drink require cleaning at intervals, particularly between dispensing different types of drink, because of contamination of the mixed drink in passageways within the machine.

The present application also recognises the benefits of providing an arrangement which has greater flexibility with regard to the types of drink to be made and the quality of the drinks. In this respect, the present application recognises that some drinks benefit from storing different respective components of the final drink separately until they are mixed. This is particularly true for the alcoholic and acidic components of a cocktail. Mixing components of a drink immediately prior to dispensing them to a user is advantageous in that it can provide a mixed drink of higher quality. This may be particularly true when used for mixing drinks, such as cocktails. Document EP-A-1 120 377 discloses container devices including different compartments housing components of a drink. The container devices include separate openable access to the different compartments. Through these passages the different components can be mixed and discharged. The document FR-A-2856478 relates to the technical field of labile blood products or others biofluids. These sampled biofluids are thus analyzed, e g. for IHV. The document WO-A-2005/023268 relates to an application assembly, suitable for dispensing galenical preparations to be applied topically. The document WO-A-97/06076 discloses a device for mixing and dispensing a mixed substance for use on the hair and/ or in cosmetic, medical or pharmaceutical application. The document DE-373227-C discloses a device for separate storage of materials for beauty care products, in particular those for dental and oral hygiene. According to the present invention, there is provided a drinks container comprising walls, including an outer wall, defining a plurality of compartments configured to house respective components of a drink. The walls may be rigid. It may also comprise communication paths including openable seals for communicating said respective components for mixing. The outer wall may have a delivery outlet for dispensing the mixed respective components. It may be configured to be openable to define the delivery outlet.

According to the present invention, the drinks device preferably comprises a holder configured to receive a drinks container and a dispensing mechanism configured to open the seals of a drinks container in the holder and to drive the respective components housed in the compartments of the drinks container out of the delivery outlet to a user receptacle. The drinks device may open the outer wall to form the delivery outlet. A dispenser may be provided for dispensing liquid mixer, such as water, in conjunction with the mixed respective components from the delivery outlet of the drinks container into the user receptacle.

In this way, it becomes possible to deliver a high quality mixed drink, such as a cocktail, without contaminating parts of the drinks device with drinks components of different drink types. Any required water for mixing with the components in the drinks container is provided separately by the drinks device. The invention allows an in-home drinks making system, particularly for cocktails, which delivers drinks of "hand-made" quality at home with minimum operations. It is possible to provide premium product quality, simple consumer operation and plug-and-play functionality. All necessary components of a variety of different types of drink may be stored in a respective drinks containers. Drinks containers are preferably configured for single-use and/or are non-refillable. They may thus be disposable. It is easy for a user merely to provide a drinks container to a drinks device to produce the required drink. No significant cleaning of the drinks device is necessary.

The drinks device may include a dispensing mechanism for physically collapsing or moving at least a portion of the drinks container received by the holder so as to cause the seals of the drinks container to rupture. For example, in one preferred embodiment, the top and bottom of the drinks container may be pushed together to cause a foil to be pierced by a base portion of the container.

In this way, a drinks container is merely loaded into the drinks device and the drinks device is able to open the respective compartments of the drinks container so as to start mixing of the required drink.

Preferably, the outer walls include a base portion movable inwardly of the container from a storage position to an active position and configured to open the openable seals with movement to the active position.

In this way, it is only necessary to move an outer wall of the container formed from the base portion so as to open the respective compartments.

The drinks device may be provided with a plate for pushing the base portion inwardly of the drinks container from the storage position to the active position.

Preferably, the outer walls define a recess for receiving the base portion, the recess being configured to guide the base portion between the storage position and the active position.

In particular, outer walls forming sidewalls of the drinks container preferably extend so as to form a substantially parallel peripheral wall into which the base portion may be fitted. The base portion may then be pushed and slid parallel with the peripheral wall so as to move to the active position in which the seals are opened.

The openable seals of the respective compartments are preferably provided internally of the drinks container facing the movable base portion. Preferably, an inwardly facing side of the base portion includes respective piercers for the respective compartments. The piercers are preferably configured to pierce and open the openable seals when the base portion is moved from the storage position to the active position.

In this way, the openable seals are kept internal of the drinks container and are not exposed to the general environment, thereby maintaining high standards of hygiene. Opening of multiple compartments can be achieved easily merely by pushing the base portion inwardly of the container.

The dispensing mechanism may pressurise the compartments by introducing pressurised air or gas. Alternatively, the compartments of the drinks container may be compressed and physically collapsed so that they are pressurised.

It is possible to house a respective source of gas within each drinks container as an additional component for the mix of a drink. It is also possible to transfer the gas from the drinks container to the drinks device for mixing with the water to be dispensed from the water dispenser of the drinks device.

The walls of the drinks container may further define an additional compartment for storing a source of gas as an additional component.

In this way, it is possible to provide not only still mixed drinks, but also carbonated mixed drinks. If the type of drink to be produced from a particular drinks container is intended to be carbonated, that drinks container can store the source of gas for carbonation.

There is no need for a user to consider keeping the drinks device stocked with a source of gas. Carbonation is provided automatically for drinks requiring such carbonation.

The drinks device may include a water chamber. The water chamber is preferably in fluid communication with the water dispenser.

In this way, water is provided within the drinks device for mixing with components of a drink as required. The drinks device may be configured to store in the water chamber, the amount of water required for the particular drink being mixed. Also, the water chamber could cool the water to a temperature desired for the drink to be mixed.

The water chamber may be configured to house carbonated water under pressure. Alternatively, there may be a separate carbonation chamber where the water is carbonated and stored briefly before being added to the drink.

In this way, the drinks device is able to mix carbonated drinks as required. Preferably, gas is received from the drinks container.

The additional compartment of the drinks container may store a compressed gas. Alternatively, the additional compartment of the drinks container may store a component (in the sense of a chemical compound or such like) activatable to release gas.

Either arrangement has the advantage of providing the source of carbonation within the drinks container itself. However, there may be advantages to providing an activatable component, such as a dry reagent, in that the drinks container need only be configured to store the activatable component, rather than house gas under pressure.

The outer wall of the drinks container may further define a gas outlet. Preferably, the gas outlet is configured to communicate the additional compartment with a water chamber of the drinks device for supplying carbonated water to mix with the mixed respective components.

The drinks device may include a gas supply path configured to connect to the gas outlet of a drinks container received by the holder. The gas supply path may additionally be configured to supply the gas from the additional compartment of the drinks container to the water chamber so as to form carbonated water. Whether or not the water chamber is used, the water may be carbonated by having the gas in intimate contact with the liquid with a high surface area to liquid volume ratio, this may be a number of means including, injection of gas through a small orifice, introduction of gas through a highly porous media (e.g. frit) or entrainment of small bubbles in a extended flow path.

In this way, it is possible to produce within the drinks device a source of carbonated water for mixing with the mixed components of the drinks container.

Where the additional compartment of the drinks container contains an activatable component for producing the gas, the drinks device may be provided with a water supply configured selectively to supply water to the additional compartment of the drinks container when received by the holder. The water may be used to activate the solid component stored in the additional compartment so as to release the gas.

In this way, it is possible automatically to produce the gas and receive it within the drinks device for mixing with water.

It would be possible to have a drinks device configured specifically for drinks containers housing either compressed gas or activatable components. However, it is also possible to provide a drinks device capable of receiving drinks containers of both types.

The drinks container may include a cooling path carrying mixed components to the delivery outlet. The cooling path is used for cooling the mixed respective components before dispensing by the delivery outlet.

In this way, it is possible to cool the components of a drink as required for the drink.

The cooling path may be located immediately adjacent to an inner surface of a cooling portion of the outer wall. By cooling the outer wall at the cooling portion, the cooling path and its contents may thus be cooled.

The drinks device may include a cooling surface for receiving the cooling portion of the outer wall of a drinks container when it is received by the holder. The cooling surface may be configured to cool the cooling portion and, hence, the cooling path of the drinks container received by the holder.

In this way, the cooling device is able to cool the contents of the drinks container to a temperature as required for the respective type of drink for that drinks container.

The cooling surface may have a shape configured to match the cooling portions of outer walls of drinks containers to be received by the holder. In this way substantially all of a cooling portion of an outer wall of a drinks container received by the holder may contact the cooling surface. As a result, a better thermal connection may be made between the cooling portion of a drinks container and the cooling surface of the drinks device and a desired temperature within the cooling path may more assuredly be achieved.

In order to achieve most efficient cooling of mixed components passing along the cooling path, the cooling path should have a relatively long extent such that, as the mixed components flow along the cooling path, they remain in contact with the cooling path for an extended period of time, namely over the extended length of cooling path. In this respect, preferably the cooling path extends along a circuitous route so as to substantially fill the entire area of the inner surface of the cooling portion of the outer wall. In this way, the effect of cooling the cooling portion of the outer wall is transferred most efficiently to cooling the cooling path to minimise waiting time for the consumer.

Preferred examples of the cooling path include a spiral or a labyrinth extending to the delivery outlet.

As an alternative, the cooling surface of the drinks device may be provided on a feature of the drinks device for insertion into the drinks container. The cooling surface may thus cool the cooling portion of the drinks container internally of the drinks container. The drinks container may be provided with an opening allowing insertion of that feature. Preferably, in the same way as described above, the cooling surface and cooling portion are optimised for cooling of the cooling path in the drinks container.

The drinks container may include a mixing chamber for mixing the respective components. Communication paths may be provided between respective compartments and the mixing chamber. The openable seals of the drinks container may be openable, for instance under pressure or by piercing, to connect the compartments to the mixing chamber.

The communication paths, once opened, preferably allow respective ones of the components to be driven to a compartment of at least one other of the components so as to mix the components.

The mixing chamber may be included in a base portion movable inwardly of the container from a storage position to an active position and configured to open the openable seals with movement to the active position. The mixing chamber is thus provided internally of the base portion and is provided for mixing the respective components. Piercers may be configured as peripheral wall sections defining the respective communication paths. In this way, the communication paths are located between respective compartments and the mixing chamber with openable seals for communicating the respective components to the mixing chamber for mixing prior to dispensing from the mixing chamber.

In this way, the base portion may be pushed to its active position so as to open the seals and connect the compartments with the mixing chamber housed within the base portion.

The delivery outlet may be provided in the base portion. Also, a cooling path may be provided internally of the base portion.

Preferably, the cooling path extends between the mixing chamber and the delivery outlet.

In this way, the mixed components can easily be guided from their respective compartments to the delivery outlet using only the base portion which contains the required guiding flow channels. Cooling of the mixed components can be achieved by applying cooling to the base portion as the mixed components flow to the delivery outlet.

Preferably, the drinks device includes a plate for pushing the base portion inwardly of the drinks container from the storage position to the active position. That plate may be the cooling plate and may include the cooling surface.

With such an arrangement, it may be possible to use a drinks container at ambient temperature and, without having to wait to cool down the entire drinks container, the mixed components can be cooled very rapidly as they flow to the delivery outlet.

The drinks device may be configured to mix the components by driving them between the respective compartments. By pressurizing all but one of the compartments, the compartments may be driven into that one compartment to mix. Alternatively, components may be driven successively from compartment to compartment. Indeed, they may be driven back and forth. Preferably, the least viscous components are first driven into the compartment of the most viscous component.

The mixing actuator of the drinks device can be achieved by selectively applying pressure to different compartments. Where the drinks device has a single source of pressure, a selective valve arrangement may be provided so as to apply pressure selectively to individual compartments thereby driving fluid from one compartment to another. Alternatively, individual pressurising components, for example individual bellows, may be provided for pressurising individual respective compartments so as to drive components between the compartments.

Cooling of the components may be achieved by cooling them within the compartments. This may be carried out by cooling from outside the housing or, as mentioned above, by inserting a feature into the housing. Cooling of components with the compartments may be optimised as a result of driving the components back and forth as discussed above, in other words shuttling the fluid during the cooling process.

In a preferred embodiment, the drinks device operates to rupture the seals of the compartments but maintains the delivery outlet closed. By pressurizing compartments selectively, their components can be driven from compartment to compartment via the communication paths. Once mixed, the delivery outlet is opened, such that pressurizing the compartments dispenses the mixture.

A mixing chamber may additionally be provided as a static mixer with the mixture being driven through the mixing chamber on its way to the delivery outlet.

The drinks container may house a filter for use in filtering water to be used by the drinks device. The filter may be housed within a filter passageway in the drinks container. The outer wall of the drinks container may define a water inlet and a water outlet and the filter passageway may connect the water inlet to the water outlet such that water passing between the water inlet and the water outlet is filtered by the filter.

So as to make use of the filter in a drinks container, the drinks device may include a water supply having a water supply outlet configured to connect with the water inlet of a drinks container received by the holder. In this way, the drinks device can supply water to the water inlet of the drinks container. The drinks device may also include a water chamber inlet configured to connect with the water outlet of the drinks container received by the holder. In this way, the drinks device receives filtered water from the water outlet of the drinks container.

The outer wall of the drinks container may include a mixer inlet for receiving mixer liquid, such as water. In this respect, the drinks container may further include a mixer passage (e.g. based on a static mixer) connecting the mixer inlet to the delivery outlet so that the mixed respective components and the mixer liquid may be dispensed together from the delivery outlet. With this arrangement, a mixing feature may be provided in the drinks container for mixing the mixer liquid with the mixed respective components. In this way, separate laminar flows of mixer liquid and mixed respective components can be avoided at the point of dispensing from the delivery outlet.

At least part of the cooling path may connect the mixer passage to the delivery outlet.

In this way, the cooling path, for instance provided in a movable base portion, can be used to cool not only the mixed components from the storage compartments, but also the mixer liquid provided from outside.

According to the present invention, there is provided a method of using a drinks device to provide a variety of different types of drink requiring respective mixes of components and a mixer liquid, such as water, juice or soft drink. The method includes arranging drinks containers each to house separately the required components of a respective drink and providing each drinks container with a respective delivery outlet for dispensing a mix of the respective housed components. It also includes using the drinks device to act upon respective drinks containers so as to mix the separately housed components and dispense the mixed components from the respective delivery outlet in conjunction with the mixer liquid.

The mixed components may be dispensed from the respective delivery outlet in conjunction with mixer liquid dispensed from a dispenser of the drinks device. The mixer liquid may be dispensed separately, but, for instance, alongside the delivery outlet or may be fed into a portion of the drinks container to be dispensed out of the delivery outlet with the mixed components.

A respective source of gas may be housed within each drinks container as an additional component for the mix of a drink. The gas may be transferred from the drinks container to the drinks device for mixing with the mixed liquid to be dispensed from the dispenser of the drinks device.

Preferably, mixing of the gas with the mixed liquid results in the gas being dissolved in the mixed liquid, for example in a process of carbonation.

The mixer liquid may be a juice, soft drink or other mixer, but is preferably water.

According to the present invention, there is also provided a corresponding drink system including a drinks device and at least one drinks container.

The invention will be more clearly understood from the following description, given by way of example only, with reference to the accompanying drawings, in which:
Figure 1 illustrates an example of a drinks device with a drinks container;
Figure 2 illustrates schematically functional parts of a drinks device embodying the present invention;
Figures 3(a) and (b) illustrates schematically component parts of drinks devices and drinks containers embodying the present invention;
Figure 4 illustrates an example of a drinks container;
Figures 5(a) and (b) illustrate schematically connections to the drinks container;
Figures 6(a) and (b) illustrate exploded views of an example of the drinks container;
Figure 7 illustrates an exploded view of an alternative arrangement of the drinks container;
Figure 8 illustrates compartments of the drinks container;
Figure 9 illustrates an alternative arrangement of the compartments of the drinks container;
Figure 10 illustrates a cross section through the drinks container;
Figures 11 (a), (b) and (c) illustrate a base part for use within the drinks container;
Figure 12 illustrates schematically component parts of a drinks device and drinks container embodying the present invention;
Figures 13(a) and (b) illustrate exploded views of a preferred drinks container embodying the present invention;
Figure 14 illustrates a cross-section through the drinks container of Figures 13(a) and (b)); and
Figure 15 illustrates a base of a drinks container similar to that shown in Figures 13(a) and (b) with its base film removed.

The present invention is able to provide a variety of different types of drink requiring respective mixes of components by providing different components of a drink in respective compartments of a container, the container being configured to mix the components prior to dispensing from a delivery outlet in the container itself. In this way, a drinks device is able to receive different drinks containers so as to provide the variety of different types of drink and, by using the delivery outlets of the drinks containers, the drinks device can avoid contamination with any of the components of any of the drinks and, hence, not require cleaning between the dispensing of different drinks.

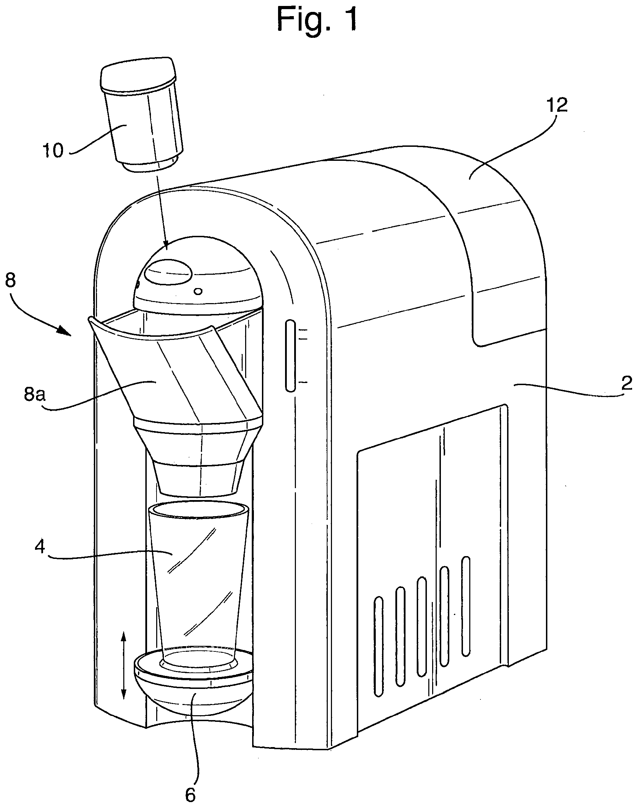

In Figure 1, there is illustrated, by way of example, a drinks device embodying the present invention.

The drinks device 2 may be provided as a countertop apparatus, for example for use in kitchens. The illustrated drinks device 2 might for example be approximately 250 to 300 mm wide, 300 to 400 mm deep and 250 to 300 mm high. It is configured to dispense a drink into a user receptacle 4 such as a glass as illustrated in Figure 1. In the illustrated embodiment, drinks device 2 includes a shelf 6 acting as a support and, optionally, a drip tray. A user may stand the drinks receptacle 4 on the shelf 6 directly underneath the dispensing of a mixed drink. Preferably, the shelf 6 may be selectively located at an adjustable height position so as to accommodate different user receptacles of different sizes.

As illustrated, the drinks device 2 includes a holder 8 for receiving a drinks container 10. In the illustrated embodiment, the holder 8 is open at an upper side so as to receive the drinks container 10. It might, preferably, be hinged at a lower portion to form a door 8a so that the holder can be closed, for example by pushing the door 8a of the holder inwardly of the drinks device 2 so as to lie flush with the housing of the drinks device 2. However, any other arrangement of holder could be provided which receives a drinks container for connection to the drinks device in the manner to be described below.

As will be discussed in greater detail below, the drinks container 10 may be provided in the form of a pod to be received by the holder and used with the drinks machine 2.

It is expected that most drinks that are to be produced from respective drinks containers 10 will require the addition of water, in some cases carbonated. In this respect, the drinks device 2 could be connected to a supply of water. Alternatively, as illustrated in the embodiment of Figure 1, an openable cover 12 provides access to a water tank, which can be filled by the user. In the illustrated embodiment, a tank of approximately 600 ml will be appropriate. The water tank could be detachable to assist with filling.

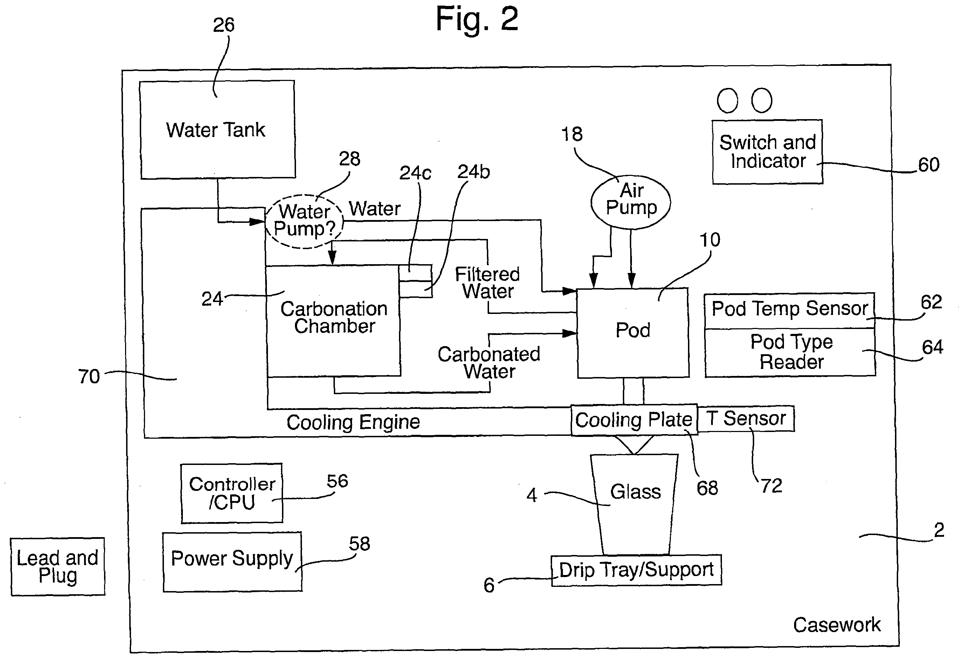

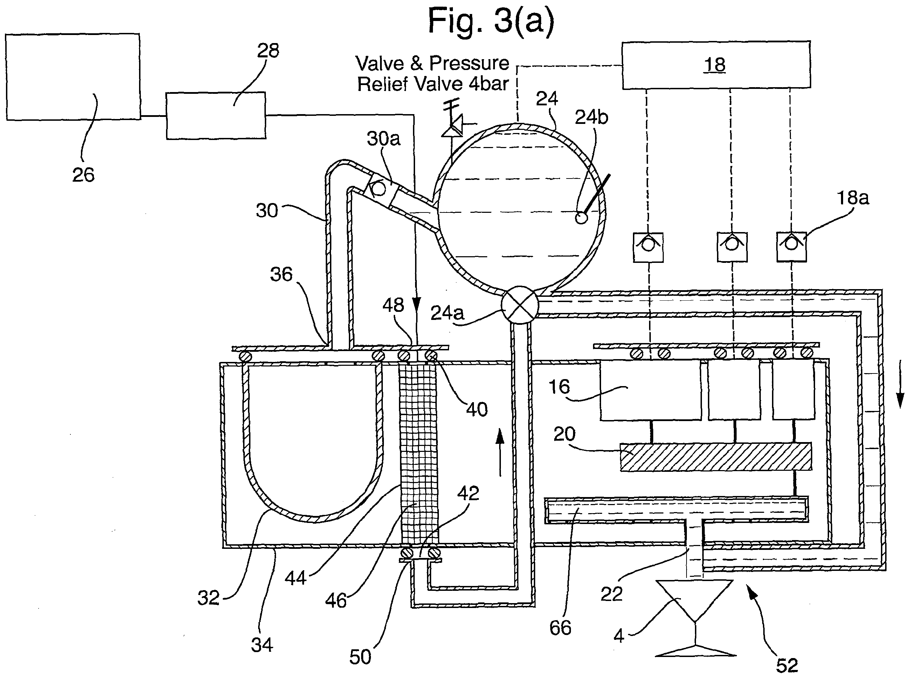

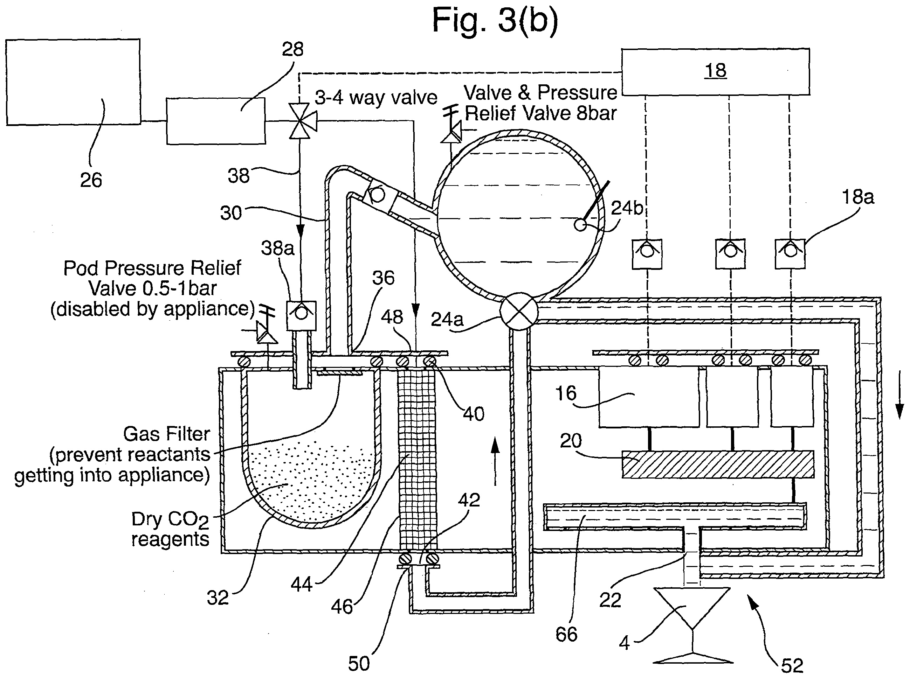

Figures 2 and 3(a) and 3(b) illustrate schematically component parts of a drinks device 2 embodying the present invention and a drinks container embodying the present invention and including a number of optional/preferable features.

As explained above, a drinks container 10 such as a pod is received in a holder 8. This may be provided with a closable door 8a. In addition, it is possible to incorporate a motor and drive in the drinks device 2, for example for moving the pod 10 and/or parts of the holder 8, such as the door 8a.

As will be discussed in further detail below, the drinks container 10 includes a plurality of compartments 16 for housing different components of a drink to be mixed.

In the illustrated embodiment, the drinks device 2 includes an air or pneumatic pump 18 which operates a mechanism for pressurizing the compartments 16 to expel their contents into a mixing chamber 20 of the drinks container 10 and then outwardly of a delivery outlet 22 of the drinks container 10 into the receptacle 4. Figures 3(a) and 3(b) illustrates air non-return valves 18a through which the air pump 18 supplies pressurized air, for example at 2 bar or lower, to the compartments 16 to push the housed components of the required drink into the mixing chamber 20.

Alternative arrangements are possible, for instance where the drinks device 2 acts to physically collapse, for instance crush, the compartments 16 of the drinks container 10, for example as a concertina so as to expel the components housed in the compartments 16. Any appropriate means could be provided, including the use of the pneumatic/air pump 18 for actuating the mechanical compression.

It is noted that many drinks will require carbonated water. In this respect, the embodiment illustrated in Figures 2, 3(a) and 3(b) includes a water chamber 24. For still drinks, the water chamber 24 may merely contain still water for mixing with the mixed drink components dispensed from the delivery outlet 22 of the drinks container 20. A level sensor 24b and/or temperature sensor 24c could be provided to ensure the correct amount and correct temperature of water respectively.

The illustrated water chamber 24 is able to provide carbonated water. Still water is provided to the water chamber 24, either from an external water supply or from a water tank 26 as discussed above. Where necessary, a water pump 28 may pump the water from the water tank 26 to the water chamber 24. In addition, a gas supply path 30 connects the water chamber 24 to the drinks container 10. A one-way supply valve 30a may be provided in the gas supply path 30.

As illustrated, the drinks container 10 includes an additional compartment 32 for containing the source of gas, for example carbon dioxide. An outer wall 34 of the drinks container 10 is provided with a gas outlet 36 and the gas supply path 30 is arranged to connect with the gas outlet 36. In this way, a drinks container 10 intended for use in producing a carbonated drink itself provides the source of carbonation for use by the drinks device 2. Embodiments such as illustrated in Figure 3(a) are possible where the additional compartment stores the gas itself in a compressed state and means are provided in the drinks device 2 for releasing the gas from the additional compartment 32 through the gas supply path 30 and into the water chamber 24. However, in the illustrated embodiment of Figure 3(b), the additional compartment 32 houses a component, such as a dry reagent, which is activatable to release carbon dioxide for carbonation. The component may be activatable by introducing water into the additional compartment 32. Thus, in the illustrated embodiment, a water supply 38 is provided for selectively supplying water to the additional compartment 32. Appropriate means for connecting and sealing between the additional compartment 32 and the water supply 38 may be provided and a water non-return valve 38a is illustrated in Figure 3(b). Where the drinks device 2 receives a drinks container 10 having an additional compartment 32 containing a component for releasing gas, the drinks device 2 can thus supply an appropriate amount of water to the additional compartment 32 of the drinks container 10 so as to release gas for carbonating the water held in the water chamber 24 of the drinks device 2.

It may be desirable to filter the water supplied to the drinks device 2 either from the water tank 26 or the external supply. Where the drinks device 2 is used repeatedly and requires appropriate replacement of a water filter, it becomes an undesirable requirement on the user to remember to replace the water filter. Even though the system of the present invention proposes a supply of water from the drinks device 2 separate from the drinks container 10, the illustrated embodiments provide for replacement of the water filter with each new use of a new drinks container 10.

As illustrated in Figures 3(a) and 3(b), the outer wall 34 of the drinks container 10 includes a water inlet 40 and a water outlet 42. A passageway 44 is provided within the drinks container 10 connecting the water inlet 40 with the water outlet 42. The passageway 44 houses a filter 46 for filtering water passing between the water inlet 40 and the water outlet 42.

As illustrated schematically in Figure 3(a) and 3(b), the water chamber 24 is provided with water (either from the water tank 26 or an external supply) via the passageway 44 in the drinks container 10. The illustrated embodiment of the drinks device 2 includes a water supply outlet 48 for connection with the water inlet 40 of the drinks container 10 and for providing water from the water tank 26 (or external supply) to the passageway 44. Similarly, the drinks device 2 includes a water chamber inlet 50 configured to connect with the water outlet 42 of the drinks container 10 so as to receive filtered water from the passageway 44 in the drinks container 10.

As illustrated schematically in Figure 3(a) and 3(b), water from the water chamber 24 is dispensed from the drinks device 2 in conjunction with the mixed components from the drinks container 10. In this respect, the water dispenser may be provided separately from, for instance along side, the delivery outlet 22 of the drinks container 10. In this way, the water dispenser 52 of the drinks device 2 has no contact with the components stored in the compartment 16 of the drinks container 10 such that there will be no contamination from one drinks container to the next and no requirement for cleaning. However, as illustrated in Figure 3, it would also be possible for water to be supplied from the water chamber 24 into the drinks container 10 at a point downstream of the mixing chamber 20 so that the water mixes with the mixed components from the drinks container 10 before being dispensed from the delivery outlet 22. In this example also, there is still no contamination of parts of the drinks device 2. An appropriate inlet may be provided in the outer wall 34 of drinks containers 10.

The drinks device 2 may include a controller or CPU 56 for use in controlling various portions of the drinks device 2. The drinks device 2 is preferably powered from a power supply 58 and may include switches and/or indicators 60.

The system as described above may be operated as follows.

A drinks container 10, for instance taking the form of a pod, is loaded into the drinks device 2 by being received in the holder 8. A variety of different types of drinks container 10 may be provided. Preferably, all drinks containers 10 have the same outer form, but may have different internal configurations according to the required components for mixing and whether or not carbonation is required. In this respect, where particular inlets or outlets are not required for the particular mix of drink, those inlets/outlets may be permanently filled or blocked in the particular drinks container 10. Different sizes or numbers of compartments 16 can be provided in drinks containers 10 for different respective types of drink. Alternatively, different compartments can be left empty or partly filled according to the requirements of a particular drinks type.

As illustrated schematically in Figure 2, a pod temperature sensor 62 and pod type reader 64 may be provided for determining automatically the type of pod (drinks container 10) received by the holder 8 and its temperature. In this respect, the drinks container 10 may include some coding, for instance visual coding such as bar codes, RFID tag, solid state information etc. indicating the type of the drinks container. The pod type reader 64 identifies the type of the drinks container 10 so that the controller 56 may control the drinks device 2 appropriately. For example, where it is identified that the drinks container 10 contains components for mixing a still drink, it is not necessary for the controller 56 to introduce water into the additional compartment 32 of the drinks container 10 for releasing carbon dioxide. On the other hand, if the drinks container 10 is identified as a type of drinks container 10 containing a dry reagent in an additional compartment 32, the controller 56 will operate to introduce water into the additional compartment 32.

An appropriate amount of water is introduced into the water chamber 24 of the drinks device 2, for instance via the filter 46 of the drinks container 10 for embodiments making use of filters in drinks containers 10. In the embodiment illustrated schematically in Figures 3(a) and 3(b), a valve 24a may be used to introduce the water into the water chamber 24. An appropriate amount of water may be determined by a level sensor 24b. In this respect, information provided with the drinks container 10 and read by the pod sensor 62 and pod type reader 64, may indicate the required amount of water to be introduced into the water chamber 24.

Where carbonated water is required, the controller 56 also operates the drink device 2 so as to introduce, via the gas supply path 30, carbonating gas from the additional compartment 32 of the drinks container 10, whether this is from compressed gas or a dry reagent.

In some embodiments, particularly where the water is to be supplied from the water chamber 24 directly to a separate water dispenser 52, the water chamber 24 is preferably cooled to a desirable temperature, for example around 0° C.

With still or carbonated water in the water chamber 24, the controller operates the drinks device 2 to drive the respective components of the compartment 16 of the drinks container 10 into the mixing chamber 20 to be dispensed from the delivery outlet 22. At the same time, the contents of the water chamber 24 is supplied to the water dispenser 52 so as to be dispensed in conjunction with the mixed components from the drinks container 10. In the illustrated embodiments of Figures 3(a) and 3(b), the same valve 24a can be used to open the water chamber 24 to a dispensing passageway to the water dispenser 52.

A mixed drink is thus dispensed with freshly mixed components, including the additional component of carbonation if required, derived from the drinks container 10 and without any contamination of the drinks device 2.

The embodiments as illustrated by Figures 2 and 3(a) and 3(b) include an additional feature for cooling at least the components provided by the compartments 16 of the drinks container 10. The drinks container 10 includes a cooling path 66, which connects the mixing chamber 20 to the delivery outlet 22. The cooling path 66 is provided near the outer wall 34 of the drinks container 10. Preferably, a portion of the outer wall 34 has an inner surface and the cooling path 66 is located immediately adjacent that inner surface. It then becomes possible to cool the cooling path 66 and its contents by cooling the cooling portion of the outer wall 34.

Figure 2 illustrates schematically a cooling plate 68 for providing a cooling surface for receiving the cooling portion of the outer wall 34 of a drinks container 10. A cooling unit 70 (which could be provided additionally for cooling the contents of the water chamber 24) cools the cooling plate 68. A temperature sensor 72 can be provided so as to allow control by the controller 56. Indeed, where it is desirable to have the mixed drink of a particular drinks container 10 at a particular temperature, it would be possible for this to be read from the drinks container 10 by means of the pod type reader 64 and to control the temperature accordingly.

As discussed above, the supply of water from the water chamber 24 can be provided from a water dispenser 52 separately from the delivery outlet 22. With such an arrangement, it may be preferable for the water chamber 24 to be cooled to an appropriate temperature and an additional temperature sensor 24c may be provided for this function. Where the supply of water from the water chamber 24 is introduced to the mixed components before dispensing through the delivery outlet, this could occur downstream of the cooling path 66. Alternatively, the water could be introduced at a position between the mixing chamber 20 and the cooling path 66. In this case, cooling of the water from the water chamber 24 can be achieved in the cooling path 66 instead of or in addition to any cooling of the water chamber 24 itself.

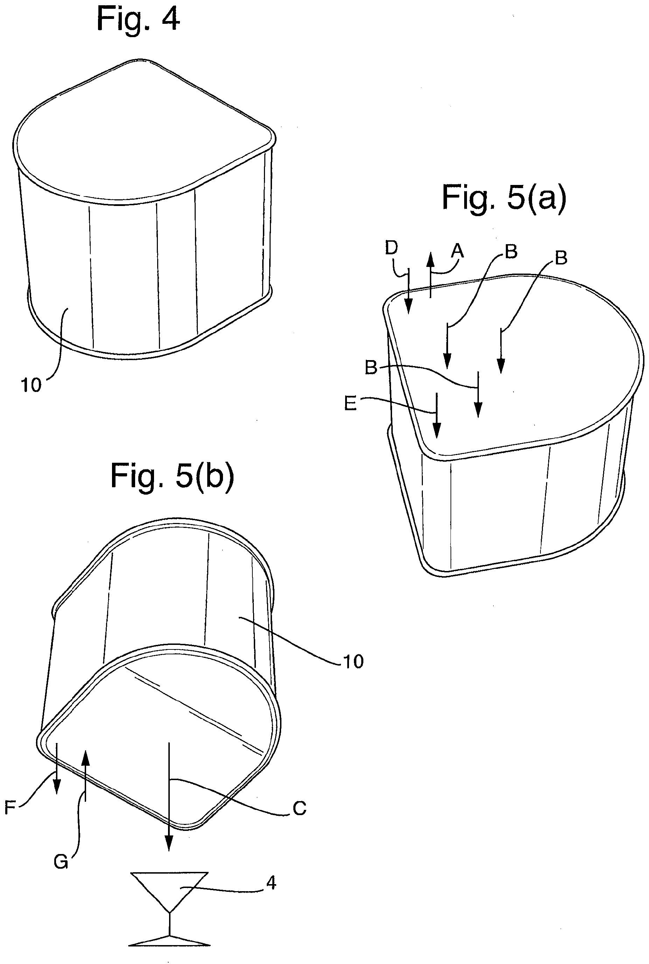

Figure 4 illustrates an example of a container 10 embodying the present invention.

Figures 5(a) and (b) illustrate schematically all of the connections which might be made to the container 10.

The connections may be made in any desirable manner. In preferred embodiments, the top face illustrated in Figure 5(a) and the bottom face illustrated in Figure 5(b) are sealed, for instance with a metallic film. Connecting components of the drinks device 2 can be provided to pierce the seal of the film, for instance with a needle or needle like component.

In the top surface illustrated in Figure 5(a), a connection A enables carbon dioxide to be provided from the container 10 to the drinks device 2. An appropriate number of connections B may be provided, to pump air into the compartment 16 of the container to expel the contents. On the bottom face illustrated in Figure 5(b), an outlet C (rather than a connection as such) forms the delivery outlet 22. The delivery outlet may be a single or multiple aperture outlet. Multiple apertures may be configured to form a spray pattern or some other visual effect.

Where the source of carbon dioxide is an activatable component, a connection D may be provided at the top face for providing water to the activatable component.

Where the container 10 provides a water filter 46, a water inlet E and a water outlet F may be provided either in top and bottom surfaces as illustrated or in bottom and top surfaces respectively.

For arrangements where water is mixed with the drinks mixture internally of the container and not provided by a separate dispenser, an inlet G may be provided for the water (carbonated where necessary). As illustrated, this is provided in the bottom face.

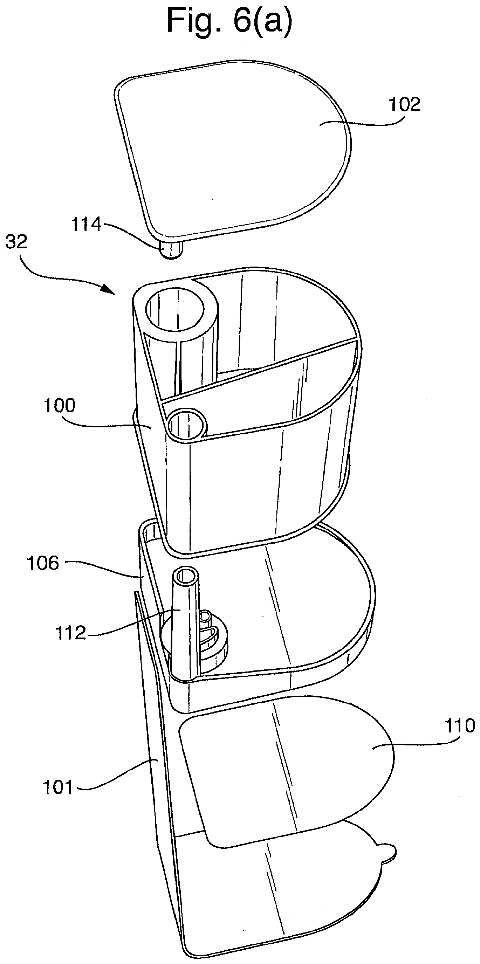

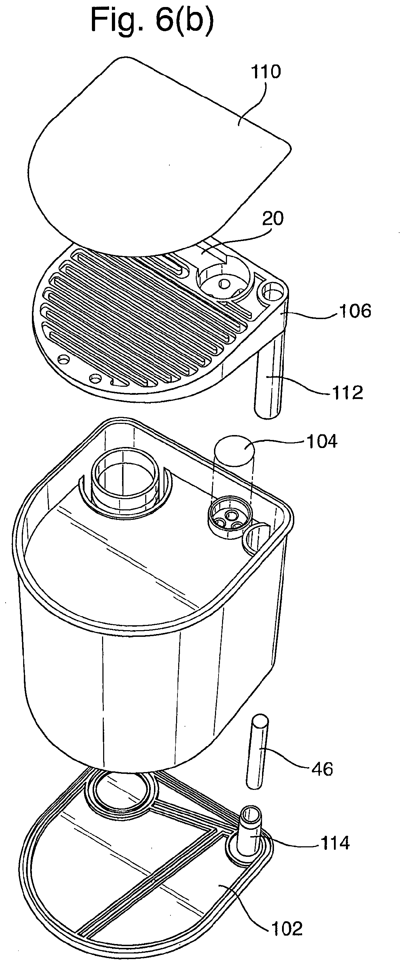

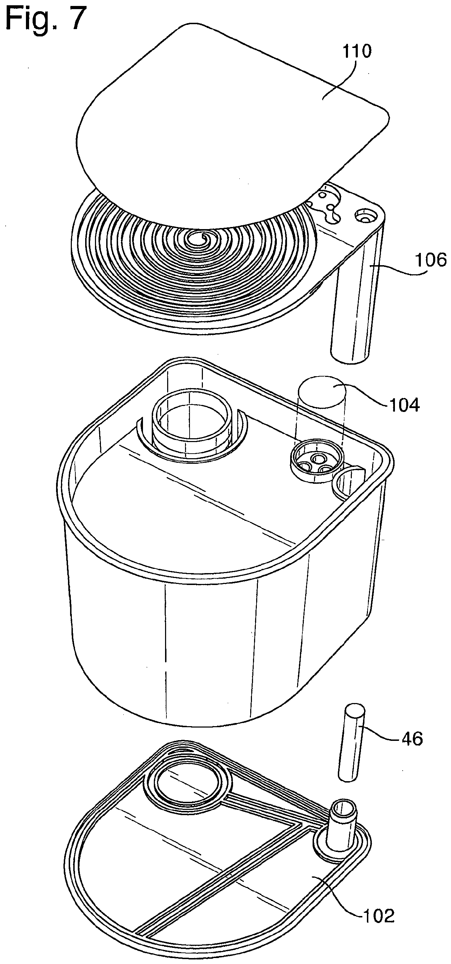

Figures 6(a) and (b) illustrate exploded views of the component parts of a container from above and below respectively. Figure 7 illustrates an equivalent view to that of Figure 6(b), but with the cooling path formed as a spiral, rather than a snake-like path.

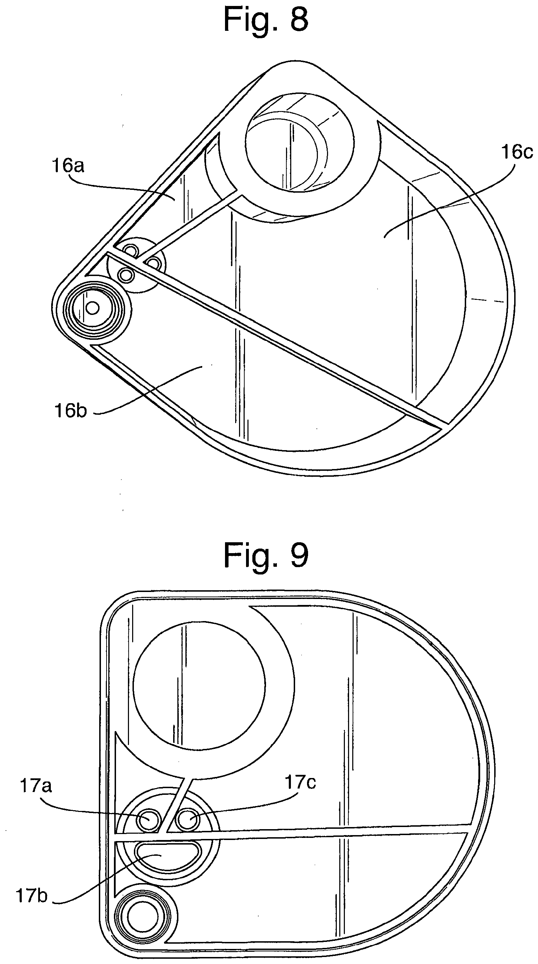

The container includes a body 100 which defines compartments 16a, 16b and 16c having dividing walls and open at the top. This is also illustrated in Figure 8 and the variation of Figure 9. The body 100 also defines the additional compartment 32 configured to store either compressed gas or an activatable component. A label card 101 may be provided.

A through hole is provided in the bottom of the body 100 for each of the compartments 16a, 16b and 16c so as to form respective outlets 17a, 17b and 17c. in the variation illustrated in Figure 9, outlet 17b is illustrated as an enlarged aperture. This may be desirable so as to cope with a mixing component of a different viscosity. For example, in a preferred embodiment, the compartments 16a, 16b and 16c are expected respectively to contain 6 ml acid (plus 10% headspace) up to 30 mls syrup (plus 10% headspace) and 50 ml alcohol (plus 10% headspace). In such an embodiment, an additional compartment 32 of 15 mls might be provided for CO₂ reagents.

As illustrated in Figure 6(a) the top of the body 100 may be sealed with a lid 102, thereby sealing the compartment 16a, 16b and 16c and also the additional compartment 32. The lid 102 may be a part that is ultrasonically welded onto the body, for example with features preformed for mating with walls of the body. It may have appropriate areas thinned for piercing and connecting with the drinks device or may have a film, for instance a metal film, sealed across its surface or selected portions of its surface.

In the illustrated embodiments, a compartments seal 104 is provided for sealing the underside of the outlets 17a, 17b and 17c of the compartments 16a, 16b and 16c.

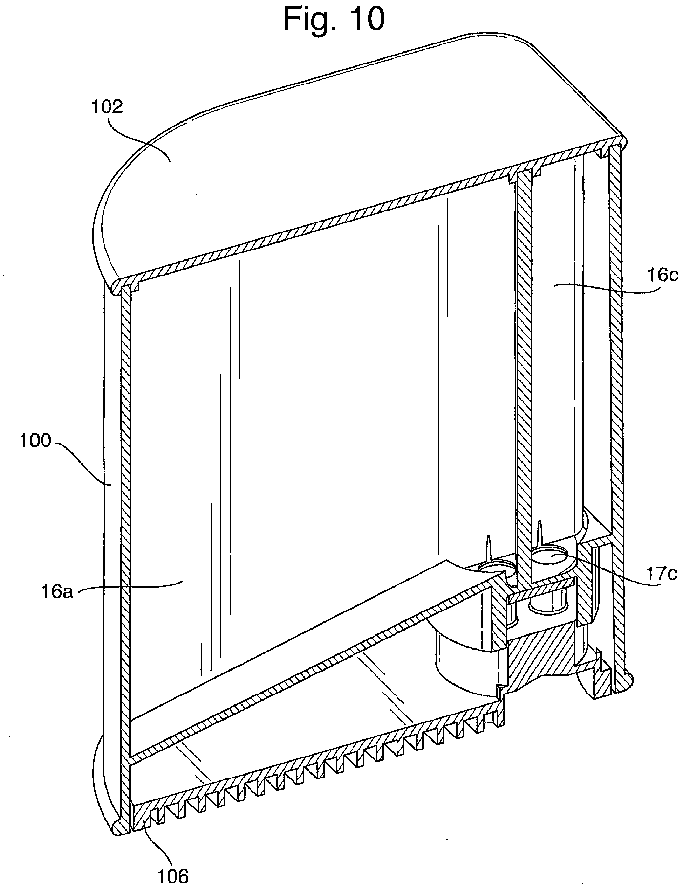

In the embodiments discussed with reference to Figures 2 and 3(a) and 3(b), opening of the compartments, for instance by rupturing the seal 104, can be achieved by introducing internal air pressure within the compartments or physically compressing the compartments themselves. Alternatively, the following is possible. The embodiment illustrated in Figure 6(a) and (b) includes a base 106 with features for piercing the seal 104. The base 106 is fitted below the compartment 16a, 16b and 16c and, in the illustrated embodiment, is located within a recess formed by walls of the body 100. This is illustrated particularly in the cross section of Figure 10.

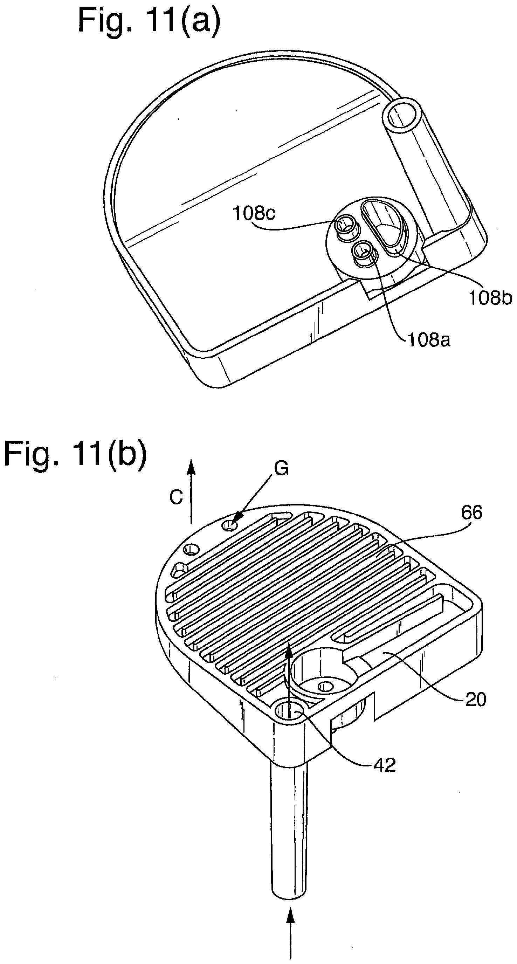

The base 106 is illustrated in further detail in Figures 11(a) and (b). It includes film piercers facing the underside of the seal 104. As illustrated, the film piercers 108a, 108b, 108c are peripheral wall sections corresponding to the shapes and sizes of the outlets 17a, 17b and 17c of the compartments 16a, 16b and 16c. The example of the base 106 of Figure 11(a) is intended for use with the alternative body of Figure 9 having a larger film piercer 108b corresponding to outlet 17b.

A base film 110 is provided at the bottom of the container, for example sealing with the outer peripheral wall of the body 100 so as to seal the container 10. The base film may, like the lid 102, be formed from a component which is ultrasonically welded to the body 100 with thinned components and/or film sealed parts as necessary. The puncturable film could be thermally welded/heat sealed to the base of the body.

Preferably, by pushing upwards against the base film 110, it is possible to push the base 106 upwards relative to the body 100 such that the film piercers 108a, 108b, 108c are pushed upwards through (and piercing) the seal 104 so as to open the outlets 17a, 17b and 17c such that the contents of the compartments 16a, 16b and 16c can flow out through the piercers 108a, 108b, 108c.

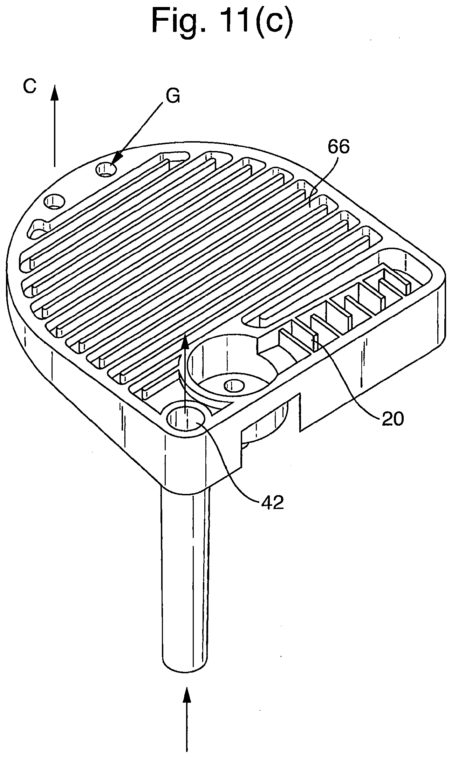

As illustrated most clearly in Figure 11(b) and the alternative design of Figure 11(c), the underside of the base 106 is shaped so as to form a mixer 20 and a cooling path 66. Drinks components flowing from the piercers 108a, 108b, 108c flow into the mixer 20 for mixing and then into the cooling path 66. It is also possible to omit the mixer. For example, the contents of the compartments can be pre-mixed by being passed between compartments. The seal 104 can be ruptured, for example using the piercers 108a, 108b, 108c discussed above, so as to connect the compartments 16a, 16b, 16c to each other via the outlets 17a, 17b, 17c. By keeping the delivery outlet closed, for example not breaking the seal of base 106. The compartments 16a, 16b, 16c can be individually pressurized so as to drive their contents from compartment to compartment and mix the components.

In the embodiments of Figure 11(b) and (c), the cooling path follows a path which successively extends from side to side. However, as noted above, a spiral path, such as illustrated in Figure 7, is also possible. Preferably, the path follows a planar surface and substantially fills that surface. In the illustrated embodiment, the cooling path 66 substantially fills an area of the base film 110 allowing it to be cooled through the base film 110 by a drinks device.

In the illustrated embodiment, water, such as carbonated water, is introduced into the container 10 downstream of the cooling path 66. However, it would also be possible to introduce the water (possibly carbonated) into the mixing chamber 20 or at least between the mixing chamber 20 and the cooling path 66.

In the illustrated embodiments, the body 100 also defines a passageway 44 extending from top to bottom.

The passageway 44 does not connect to other internal parts of the container, but is able to house the water filter 46.

In the illustrated embodiment, the base 106 includes an upwardly extending first tubular part 112 which is slidable within the passageway 44. The water outlet 42 is thus provided at the lower end of the base 106 and the tubular member 112 helps guide the base 106 for movement when the film piercers 108 pierce the film 104.

At the top of the container, a second tubular member 114 may extend downwardly from the lid 102 and, preferably, inside the first tubular member 112 so that the first and second tubular members can move telescopically. Preferably, the water filter 46 seals either with the walls of the first tubular member 112 or the walls of the second tubular member 114, but, in any event, does not impede relative movement of the first and second tubular members.

The present invention has particular application for drinks containers containing the component parts of alcoholic cocktails. In this respect, it is important for the final quality of a mixed cocktail that high-quality fresh products are mixed only a short time before serving. There can be particular negative issues regarding quality if acidic components and alcoholic component are mixed in advance. The features of the drinks container discussed herein allow products to be stored separately and kept fresh until the time of serving. In particular, the container may be constructed from hard, rigid, solid plastics materials with sealed separate compartments for different components which are kept separately until mixing immediately before serving.

The following embodiments include particularly preferred features.

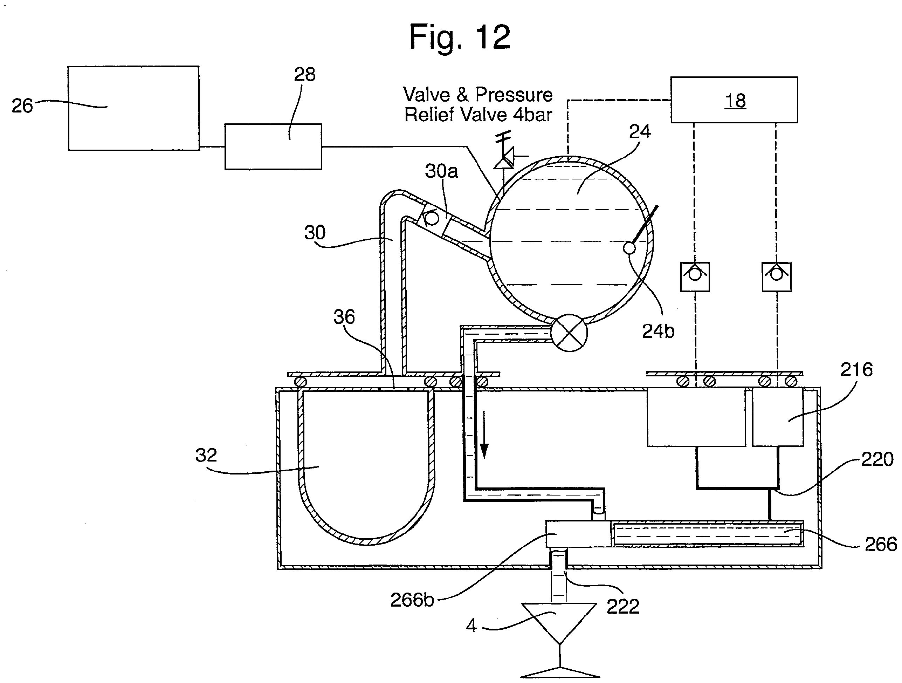

Figure 12 illustrates schematically a system having a drinks device and drinks container and follows on from the description of Figure 3(a).

As compared with the example of Figure 3(a), the water filter 46 is omitted. However, it should be understood that the arrangement of Figure 12 could be modified to include a water filter internally of the drinks container between the water chamber 24 and the cooling path 66.

As illustrated in the embodiment of Figure 12, water (which may be carbonated if the drinks container includes a CO₂ cartridge 32) is fed to the drinks container, for instance at an upper surface, and flows via a passageway 144 within the drinks container to the cooling path 66 where it mixes with the mixed components of the drink before leaving the drinks container at the delivery outlet 22. Embodiments are possible where the passageway 144 joins the cooling path 66 at the start, the end or some intermediate position.

In the system illustrated in Figure 12 and in the following, a description will be given of a drinks container having only two compartments, for instance one for containing alcoholic and syrup ingredients and the other for containing acidic ingredients. Of course, arrangements are possible with additional compartments.

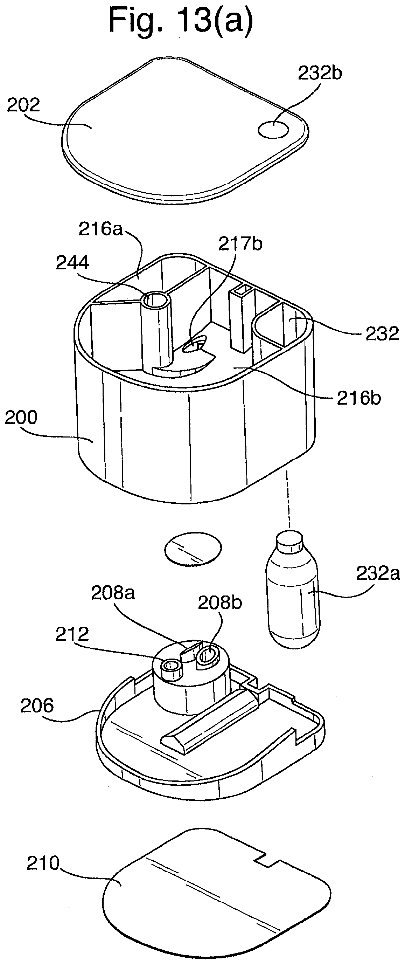

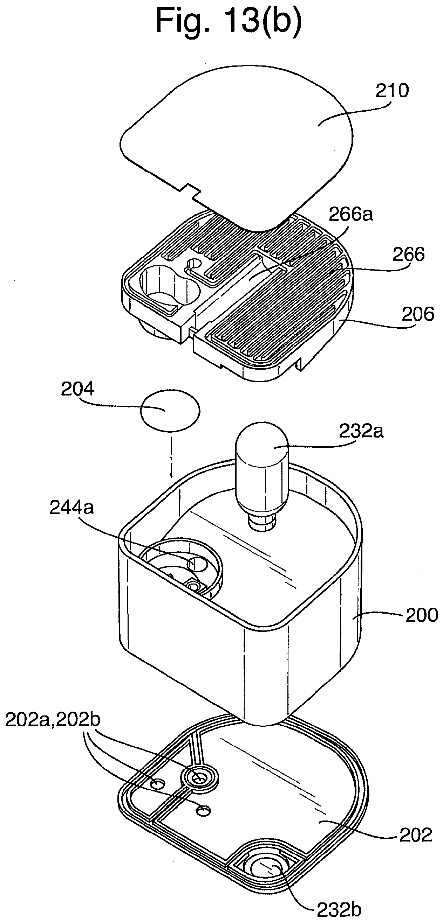

Exploded views of component parts of a preferred drinks device are illustrated respectively from above and below in Figures 13(a) and (b).

The container comprises a body 200 with a lid 202 at its top and a base 206 at its bottom, which together define the outer walls for the container. The lid 202 is sealed to the body 200 so as to define two respective compartments 216a and 216b for storing separate components of a drink to be mixed. They also define a compartment 232, which may be open at its lower side.

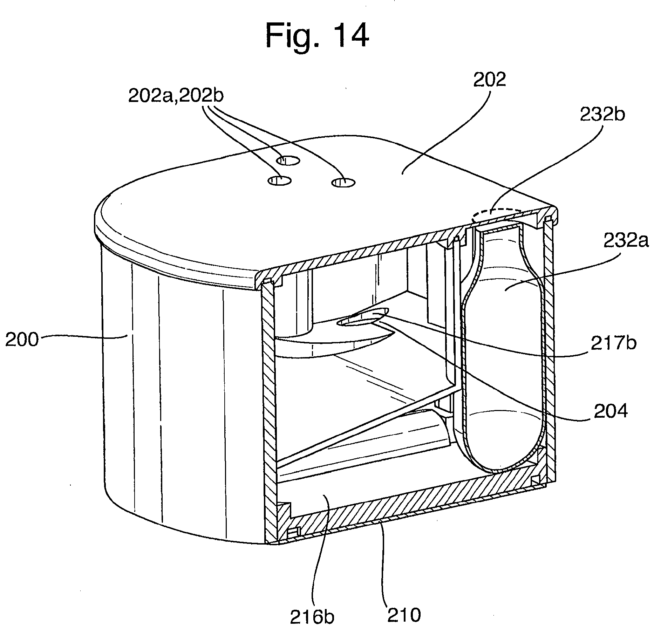

As illustrated in the cross-section of Figure 14, the compartment 232 is configured to house a CO₂ cartridge 232a. The CO₂ cartridge 232a may contact an inner face of the base 206. A tamper-evident door 232b may be provided in the lid 202 immediately adjacent an outlet portion of the CO₂ cartridge 232. For activation of the drinks container, the base 206 is pushed and moved upwardly into the body 200. The inner face of the base 206 will thus pushed upon the cartridge 232a and push its outlet up through the door 232 in the lid 202. In this way, a drinks device into which the drinks container is loaded may be provided with access to the CO₂ outlet of the CO₂ cartridge 232.

As discussed above, each of the compartments 216a, 216b has a respective outlet, with only outlet 217b evident in the drawings. On the underside of the compartments, on a surface facing the base 206, a frangible film is provided so as to seal the outlets of the compartments 216a and 216b.

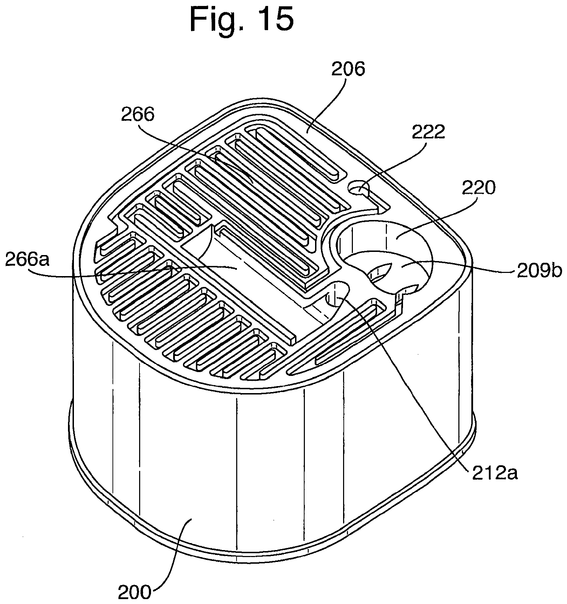

On a face of the base 206 facing inwardly of the container, film piercers 208a and 208b are provided opposite the film 204 and the outlets behind it. The film 204 thus forms openable seals for each of the outlets. By pushing the base upwardly and inwardly of the container, the film piercers 208a and 208b pierce the film 204 and open the outlets. As illustrated, the film piercers 208a, 208b are peripheral wall sections which correspond to the shapes and sizes of the outlets of the compartments. They define communication paths therethrough into a mixing chamber 220 formed in the base 206. Only communication path 209b is visible in Figure 15.

Figure 15 illustrates the container from its underside with the base film 210 removed from the base 206. With the base film 210 in place on the base 206, the base defines the mixing chamber 220 internally. As the base 220 is moved inwardly of the container so as to open the outlets of the respective compartments, the mixing chamber 220 moves with it. The respective components of the drink housed in the respective compartments flow from those compartments into the mixing chamber 220 so as to be mixed.

As illustrated in Figure 15, a lower or outer face of the base 206 to be sealed with the base film 210 includes a channel section of elongate and labyrinth path. This channel, with the base film 210 sealing on the base 206 forms a cooling path from the mixing chamber 220 to the delivery outlet 222.

The cooling path 266 travels over a relatively long path over substantially all of the remaining area of the base 206. By applying cooling, for instance from a cooling plate, to the base film 210 of the base 206, the mixed components can be cooled as they travel from the mixing chamber 220 to the delivery outlet 222.

The Figures also illustrate a passageway 244 formed in the body 200 from an upper side to a lower side. In particular, the passageway 244 extends to and through lower surface facing the inner surface of the base 206. The opening 244a facing the base 206 may be sealed with the film 204. Also, as illustrated, a film piercer 212 similar to the film piercers 208a and 208b may be formed on the base 206 facing the opening 244a. Thus, when the base 206 is pushed and moved inwardly to an active position in which the outlets of the compartments 216a and 216b are opened, the passageway 244 may be also opened through its opening 244a.

At the top of the passageway 244, the lid 202 is formed to seal with that passageway and is configured to provide a frangible opening to the drinks container. In particular, the frangible opening 202a can be pierced by a drinks device and mixing liquid, such as water, provided to it.

The film piercer 212 is formed as a peripheral wall section and defines a communication path to a mixer passage 212a formed in the base 206. This connects with the cooling path 266 so that the mixing liquid such as water, mixes with the components from the respective compartments 216a 216b. As illustrated, the point at which the mixing passage connects with the cooling path is intermediate the mixing chamber and the delivery outlet, but towards the delivery outlet. Other arrangements are possible with the mixing passage 212a joining the cooling path 266 at other positions or even immediately adjacent the delivery outlet 222 or immediately adjacent the mixing chamber 220.

In the illustrated embodiment, a space 266a is provided at the position where the mixing passage 212a joins the cooling path 266. This space may be provided with a static mixer 266b so as to assist with mixing of the mixer liquid with the components from the compartments 216a and 216b.

It will be noted that Figure 13(b) illustrates a slightly different form of flow path in the base 206.

Finally, reference is made to the underside of lid 202 illustrated in Figure 13(b) where thin areas 202b are provided so as to facilitate the drinks device connecting pressurised gas, such as air, to the compartments 216a and 216b so as to drive the respective components to the mixing chamber 220 in a controlled manner.

## Claims

1. A drinks container (10) comprising:
walls, including an outer wall (34) and preferably rigid, defining a plurality of compartments (16, 16a, 16b, 16c, 216a; 216b) configured to house respective components of a drink; and
communication paths between the compartments including openable seals (104, 204) for communicating said respective components for mixing;
wherein the outer wall has a delivery outlet (22, 222) for dispensing the mixed respective components, the outer wall being preferably configured to be openable to define the delivery outlet;
wherein the outer wall includes a base portion (106, 206) movable inwardly of the container (10) from a storage position to an active position and configured to open the openable seals (104, 204) with movement to the active position.

2. A drinks container (10) according to claim 1 further including:
a cooling path (66, 266) supplying the mixed respective components to the delivery outlet (22, 222) for cooling the mixed respective components flowing in the cooling path (66, 266) before dispensing by the delivery outlet (22, 222).

3. A drinks container (10) according to claim 2 wherein the cooling path (66, 266) is located immediately adjacent to an inner surface of a cooling portion of the outer wall (34), preferably by extending along a circuitous route substantially filling the entire area of said inner surface, more preferably extending as a spiral or labyrinth to carry the mixed components to the delivery outlet (22, 222), such that cooling the outer wall (34) at the cooling portion cools the cooling path (66, 266).

4. A drinks container (10) according to claim 1 wherein the outer walls (34) define a recess for receiving the base portion (106, 206), the recess being configured to guide the base portion (106, 206) between the storage position and the active position.

5. A drinks container (10) according to claim 4 wherein an inwardly facing side of the base portion (106, 206) includes respective piercers (108a, 108b, 108c, 208a, 208b, 212) for the respective compartments (16, 16a, 16b, 16c, 32, 216a; 216b, 232), the piercers (108a, 108b, 108c, 208a, 208b, 212) being configured to pierce and open the openable seals with movement of the base portion (106, 206) to the active position.

6. A drinks container (10) according to claim 4 wherein the base portion (106, 206) defines a mixing chamber (20, 220) internal of the base portion (106, 206) and for mixing said respective components and wherein the piercers (108a, 108b, 108c, 208a, 208b, 212) are peripheral wall sections defining the respective communication paths being located between respective compartments and the mixing chamber (20, 220) with openable seals for communicating said respective components to the mixing chamber (20, 220) for mixing prior to dispensing from the mixing chamber (20, 220).

7. A drinks container (10) according to any one of claims 1 to 6 when dependent upon claim 2 wherein the delivery outlet (22, 222) is provided in the base portion (106, 206) and the cooling path (66, 266) is provided internally of the base portion (106, 206).

8. A drinks container (10) according to claim 7 when dependent upon claim 6 wherein the cooling path (66, 266) extends between the mixing chamber (20, 220) and the delivery outlet (22, 222).

9. A drinks container (10) according to any one of claims 1 to 8 wherein the outer wall includes a mixer inlet for receiving mixer liquid, the drinks container further including a mixer passage (212a) connecting the mixer inlet to the delivery outlet (22, 222) so that the mixed respective components and the mixer liquid may be dispensed together from the delivery outlet (22, 222).

10. A drinks container (10) according to claim 9 when dependent upon claim 2 wherein at least part of the cooling path (66, 266) connects the mixer (212a) passage to the delivery outlet (22, 222) such that mixer liquid is cooled by the cooling path (66, 266), the drinks container (10) preferably including a mixing feature for mixing mixer liquid from the mixer passage (212a) with the mixed respective components from the mixing chamber (20, 220).

11. A drinks device (2) for providing a variety of different types of drink requiring respective mixes of components, the drinks device (2) including:
a holder (8) configured to receive a drinks container (10) according to any one of claims 1 to 10;
a dispensing mechanism configured to open the seals of a drinks container (10) in the holder (8) and to drive the respective components housed in the compartments (16, 16a, 16b, 16c, 32, 216a; 216b, 232) of the drinks container (10) out of the delivery outlet (22, 222) to a user receptacle (4), wherein the dispensing mechanism physically moves at least a portion of the drinks container received by the holder (8) to cause the seals of the drinks container (10) to rupture; and
a water dispenser (52) for dispensing water in conjunction with the mixed respective components from the delivery outlet (22, 222) of the drinks container (10) into the user receptacle (4).

12. A drinks device (2) according to claim 11 when dependent upon claim 2 wherein the holder (8) includes a cooling surface for receiving the cooling portion of the outer wall (34) of a drinks container (10) received by the holder (8), the cooling surface being configured to cool the cooling portion and the cooling path (66, 266) of the drinks container (10) received by the holder (8), the cooling surface having preferably a shape configured to match the cooling portions of outer walls (34) of drinks containers (10) to be received by the holder (8) such that substantially all of a cooling portion of an outer wall (34) of a drinks container (10) received by the holder contacts the cooling surface.

13. A drinks device (2) according to claim 12 wherein the dispensing mechanism including a plate for pushing the base portion inwardly of the drinks container from the storage position to the active position.

14. A drinks device (2) according to claim 13 when dependent upon claim12 wherein the plate is a cooling plate (68) and includes the cooling surface.

15. A drinks system for providing a variety of different types of drink requiring respective mixes of components, the system including a drinks device (2) according to any one of claims 11 to 14 and at least one drinks container (10) according to any one of claims 1 to 10.

## Patentansprüche

1. Getränkebehälter (10) umfassend:
Wände, eine äußere und vorzugsweise starre Wand (34) einschließend, die eine Mehrzahl von Fächern (16, 16a, 16b, 16c, 216a; 216b) definieren, die konfiguriert sind, um jeweilige Komponenten eines Getränks aufzunehmen; und
Verbindungswege zwischen den Fächern, zu öffnende Verschlüsse (104, 204) zum Verbinden der jeweiligen Komponenten zum Mischen einschließend;
wobei die äußere Wand einen Abgabeauslass (22, 222) zum Spenden der gemischten jeweiligen Komponenten aufweist, wobei die äußere Wand vorzugsweise konfiguriert ist, um geöffnet werden zu können, um den Abgabeauslass zu definieren;
wobei die äußere Wand einen Basisabschnitt (106, 206) einschließt, der im Inneren des Behälters (10) von einer Lagerungsposition zu einer aktiven Position bewegbar ist und konfiguriert ist, um die zu öffnenden Verschlüsse (104, 204) mit einer Bewegung in die aktive Position zu öffnen.

2. Getränkebehälter (10) nach Anspruch 1, weiter einschließend:
einen Kühlweg (66, 266), der die gemischten jeweiligen Komponenten dem Abgabeauslass (22, 222) zuführt, um die gemischten jeweiligen Komponenten, die in dem Kühlweg (66, 266) fließen, vor dem Spenden durch den Abgabeauslass (22, 222) zu kühlen.

3. Getränkebehälter (10) nach Anspruch 2, wobei der Kühlweg (66, 266) unmittelbar angrenzend an eine Innenfläche eines Kühlabschnitts der äußeren Wand (34) angeordnet ist, vorzugsweise indem er sich entlang einer gewundenen Strecke erstreckt, die im Wesentlichen die gesamte Fläche der Innenfläche füllt, wobei er sich besonders bevorzugt als Spirale oder Labyrinth erstreckt, um die gemischten Komponenten zum Abgabeauslass (22, 222) zu bringen, so dass das Abkühlen der äußeren Wand (34) am Kühlabschnitt den Kühlweg (66, 266) kühlt.

4. Getränkebehälter (10) nach Anspruch 1, wobei die äußeren Wände (34) eine Ausnehmung zur Aufnahme des Basisabschnitts (106, 206) definieren, wobei die Ausnehmung konfiguriert ist, um den Basisabschnitt (106, 206) zwischen der Lagerungsposition und der aktiven Position zu führen.

5. Getränkebehälter (10) nach Anspruch 4, wobei eine nach innen weisende Seite des Basisabschnitts (106, 206) jeweilige Locher (108a, 108b, 108c, 208a, 208b, 212) für die jeweiligen Fächer (16, 16a, 16b, 16c, 32, 216a; 216b, 232) einschließt, wobei die Locher (108a, 108b, 108c, 208a, 208b, 212) konfiguriert sind, um die zu öffnenden Verschlüsse mit einer Bewegung des Basisabschnitts (106, 206) in die aktive Position zu durchstoßen und zu öffnen.

6. Getränkebehälter (10) nach Anspruch 4, wobei der Basisabschnitt (106, 206) eine Mischkammer (20, 220) im Inneren des Basisabschnitts (106, 206) und zum Mischen der jeweiligen Komponenten definiert und wobei die Locher (108a, 108b, 108c, 208a, 208b, 212) periphere Wandabschnitte sind, die die jeweiligen Verbindungswege definieren, die zwischen jeweiligen Fächern und der Mischkammer (20, 220) angeordnet sind, mit zu öffnenden Verschlüssen zum Verbinden der jeweiligen Komponenten mit der Mischkammer (20, 220) zum Mischen vor dem Spenden aus der Mischkammer (20, 220).

7. Getränkebehälter (10) nach einem der Ansprüche 1 bis 6, wenn abhängig von Anspruch 2, wobei der Abgabeauslass (22, 222) im Basisabschnitt (106, 206) bereitgestellt ist, und der Kühlweg (66, 266) innerhalb des Basisabschnitts (106, 206) bereitgestellt ist.

8. Getränkebehälter (10) nach Anspruch 7, wenn abhängig von Anspruch 6, wobei sich der Kühlweg (66, 266) zwischen der Mischkammer (20, 220) und dem Abgabeauslass (22, 222) erstreckt.

9. Getränkebehälter (10) nach einem der Ansprüche 1 bis 8, wobei die äußere Wand einen Mischereinlass zur Aufnahme von Mischerflüssigkeit einschließt, wobei der Getränkebehälter ferner einen Mischerdurchlass (212a) einschließt, der den Mischereinlass an den Abgabeauslass anschließt (22, 222), so dass die gemischten jeweiligen Komponenten und die Mischerflüssigkeit gemeinsam aus dem Abgabeauslass (22, 222) gespendet werden können.

10. Getränkebehälter (10) nach Anspruch 9, wenn abhängig von Anspruch 2, wobei mindestens ein Teil des Kühlwegs (66, 266) den Mischerdurchlass (212a) an den Abgabeauslass (22, 222) anschließt, so dass Mischerflüssigkeit durch den Kühlweg (66, 266) gekühlt wird, wobei der Getränkebehälter (10) vorzugsweise eine Mischfunktion zum Mischen von Mischerflüssigkeit aus dem Mischerdurchlass (212a) mit den gemischten jeweiligen Komponenten aus der Mischkammer (20, 220) einschließt.

11. Getränkevorrichtung (2) zur Bereitstellung einer Anzahl von verschiedenen Arten von Getränken, die jeweilige Mischungen von Komponenten erfordern, wobei die Getränkevorrichtung (2) einschließt:
einen Halter (8), der konfiguriert ist, um einen Getränkebehälter (10) nach einem der Ansprüche 1 bis 10 aufzunehmen;
einen Spendermechanismus, der konfiguriert ist, um die Verschlüsse eines Getränkebehälters (10) in dem Halter (8) zu öffnen und um die jeweiligen Komponenten aus den Fächern (16, 16a, 16b, 16c, 32, 216a; 216b, 232) des Getränkebehälters (10) aus dem Abgabeauslass (22, 222) zu einem Benutzergefäß (4) zu befördern, wobei der Spendermechanismus zumindest einen Abschnitt des durch den Halter (8) aufgenommenen Getränkebehälters physisch bewegt, um die Verschlüsse des Getränkebehälters (10) zu veranlassen, zu brechen; und
einen Wasserspender (52) zum Spenden von Wasser in Verbindung mit den gemischten jeweiligen Komponenten aus dem Abgabeauslass (22, 222) des Getränkebehälters (10) in das Benutzergefäß (4).

12. Getränkevorrichtung (2) nach Anspruch 11, wenn abhängig von Anspruch 2, wobei der Halter (8) eine Kühloberfläche zum Aufnehmen des Kühlabschnitts der äußeren Wand (34) eines von dem Halter (8) aufgenommenen Getränkebehälters (10) einschließt, wobei die Kühloberfläche konfiguriert ist, um den Kühlabschnitt und den Kühlweg (66, 266) des von dem Halter (8) aufgenommenen Getränkebehälters (10) zu kühlen, wobei die Kühloberfläche vorzugsweise eine Form aufweist, die konfiguriert ist, um den Kühlabschnitten von äußeren Wänden (34) von Getränkebehältern (10) zu entsprechen, die von dem Halter (8) aufgenommen werden sollen, so dass im Wesentlichen der gesamte Kühlabschnitt einer äußeren Wand (34) eines von dem Halter aufgenommenen Getränkebehälters (10) die Kühloberfläche berührt.

13. Getränkevorrichtung (2) nach Anspruch 12, wobei der Spendermechanismus eine Platte einschließt, um den Basisabschnitt im Inneren des Getränkebehälters von der Lagerungsposition zu der aktiven Position zu drücken.

14. Getränkevorrichtung (2) nach Anspruch 13, wenn abhängig von Anspruch 12, wobei die Platte eine Kühlplatte (68) ist und die Kühloberfläche einschließt.

15. Getränkesystem zur Bereitstellung einer Anzahl von verschiedenen Arten von Getränken, die jeweilige Mischungen von Komponenten erfordern, wobei das System eine Getränkevorrichtung (2) nach einem der Ansprüche 11 bis 14 und mindestens einen Getränkebehälter (10) nach einem der Ansprüche 1 bis 10 einschließt.

## Revendications

1. Conteneur de boissons (10) comprenant :
des parois, comportant une paroi externe (34) et de préférence rigide, définissant une pluralité de compartiments (16, 16a, 16b, 16c, 216a ; 216b) configurés pour loger des composants respectifs d'une boisson ; et
des chemins de communication entre les compartiments comportant des joints d'étanchéité ouvrables (104, 204) pour faire communiquer lesdits composants respectifs pour leur mélange ;
dans lequel la paroi externe présente une sortie de distribution (22, 222) pour délivrer les composants respectifs mélangés, la paroi externe étant de préférence configurée pour être ouvrable pour définir la sortie de distribution ;
dans lequel la paroi externe comporte une portion de base (106, 206) déplaçable vers l'intérieur du conteneur (10) depuis une position de stockage vers une position active et configurée pour ouvrir les joints d'étanchéité ouvrables (104, 204) sous l'effet d'un déplacement vers la position active.

2. Conteneur de boissons (10) selon la revendication 1 comportant en outre :
un chemin de refroidissement (66, 266) alimentant en composants respectifs mélangés la sortie de distribution (22, 222) pour refroidir les composants respectifs mélangés s'écoulant dans le chemin de refroidissement (66, 266) avant délivrance par la sortie de distribution (22, 222).

3. Conteneur de boissons (10) selon la revendication 2 dans lequel le chemin de refroidissement (66, 266) est situé immédiatement adjacent à une surface interne d'une portion de refroidissement de la paroi externe (34), en s'étendant de préférence le long d'une voie détournée occupant sensiblement toute la superficie de ladite surface interne, de manière davantage préférée en s'étendant comme une spirale ou un labyrinthe pour acheminer les composants mélangés vers la sortie de distribution (22, 222), de sorte qu'un refroidissement de la paroi externe (34) au niveau de la portion de refroidissement refroidit le chemin de refroidissement (66, 266).

4. Conteneur de boissons (10) selon la revendication 1 dans lequel les parois externes (34) définissent un évidement pour recevoir la portion de base (106, 206), l'évidement étant configuré pour guider la portion de base (106, 206) entre la position de stockage et la position active.

5. Conteneur de boissons (10) selon la revendication 4 dans lequel un côté orienté vers l'intérieur de la portion de base (106, 206) comporte des dispositifs de perçage respectifs (108a, 108b, 108c, 208a, 208b, 212) pour les compartiments respectifs (16, 16a, 16b, 16c, 32, 216a ; 216b, 232), les dispositifs de perçage (108a, 108b, 108c, 208a, 208b, 212) étant configurés pour percer et ouvrir les joints d'étanchéité ouvrables avec un déplacement de la portion de base (106, 206) vers la position active.

6. Conteneur de boissons (10) selon la revendication 4 dans lequel la portion de base (106, 206) définit une chambre de mélange (20, 220) à l'intérieur de la portion de base (106, 206) et étant destinée au mélange desdits composants respectifs et dans lequel les dispositifs de perçage (108a, 108b, 108c, 208a, 208b, 212) sont des sections de paroi périphérique définissant les chemins de communication respectifs étant situés entre des compartiments respectifs et la chambre de mélange (20, 220) avec des joints d'étanchéité ouvrables pour faire communiquer lesdits composants respectifs vers la chambre de mélange (20, 220) pour un mélange avant distribution depuis la chambre de mélange (20, 220).

7. Conteneur de boissons (10) selon l'une quelconque des revendications 1 à 6 lorsqu'elle dépend de la revendication 2 dans lequel la sortie de distribution (22, 222) est prévue dans la portion de base (106, 206) et le chemin de refroidissement (66, 266) est fourni à l'intérieur de la portion de base (106, 206).

8. Conteneur de boissons (10) selon la revendication 7 lorsqu'elle dépend de la revendication 6 dans lequel le chemin de refroidissement (66, 266) s'étend entre la chambre de mélange (20, 220) et la sortie de distribution (22, 222).

9. Conteneur de boissons (10) selon l'une quelconque des revendications 1 à 8 dans lequel la paroi externe comporte une entrée de mélangeur pour recevoir un liquide mélangeur, le conteneur de boissons comportant en outre un passage de mélangeur (212a) reliant l'entrée de mélangeur à la sortie de distribution (22, 222) de sorte que les composants respectifs mélangés et le liquide mélangeur peuvent être délivrés ensemble à partir de la sortie de distribution (22, 222).

10. Conteneur de boissons (10) selon la revendication 9 lorsqu'elle dépend de la revendication 2, dans lequel au moins une partie du chemin de refroidissement (66, 266) relie le passage de mélangeur (212a) à la sortie de distribution (22, 222) de sorte que le liquide mélangeur est refroidi par le chemin de refroidissement (66, 266), le conteneur de boissons (10) comportant de préférence un élément de mélange pour mélanger un liquide mélangeur en provenance du passage de mélangeur (212a) avec les composants respectifs mélangés en provenance de la chambre de mélange (20, 220).

11. Dispositif de boissons (2) pour fournir une variété de types différents de boissons nécessitant des mélanges respectifs de composants, le dispositif de boissons (2) comportant :
un support (8) configuré pour recevoir un conteneur de boissons (10) selon l'une quelconque des revendications 1 à 10 ;
un mécanisme de délivrance configuré pour ouvrir les joints d'étanchéité d'un conteneur de boissons (10) dans le support (8) et pour entraîner les composants respectifs logés dans les compartiments (16, 16a, 16b, 16c, 32, 216a ; 216b, 232) du conteneur de boissons (10) hors de la sortie de distribution (22, 222) vers un réceptacle utilisateur (4), dans lequel le mécanisme de délivrance déplace physiquement au moins une portion du conteneur de boissons reçu par le support (8) pour amener les joints d'étanchéité du conteneur de boissons (10) à se rompre ; et
un dispositif de délivrance d'eau (52) pour délivrer de l'eau conjointement avec les composants respectifs mélangés en provenance de la sortie de distribution (22, 222) du conteneur de boissons (10) dans le réceptacle utilisateur (4).

12. Dispositif de boissons (2) selon la revendication 11 lorsqu'elle dépend de la revendication 2 dans lequel le support (8) comporte une surface de refroidissement pour recevoir la portion de refroidissement de la paroi externe (34) d'un conteneur de boissons (10) reçu par le support (8), la surface de refroidissement étant configurée pour refroidir la portion de refroidissement et le chemin de refroidissement (66, 266) du conteneur de boissons (10) reçu par le support (8), la surface de refroidissement présentant de préférence une forme configurée pour correspondre aux portions de refroidissement de parois externes (34) de conteneurs de boissons (10) à recevoir par le support (8) de sorte que sensiblement la totalité d'une portion de refroidissement d'une paroi externe (34) d'un conteneur de boissons (10) reçu par le support entre en contact avec la surface de refroidissement.

13. Dispositif de boissons (2) selon la revendication 12 dans lequel le mécanisme de délivrance comporte une plaque pour pousser la portion de base vers l'intérieur du conteneur de boissons depuis la position de stockage vers la position active.

14. Dispositif de boissons (2) selon la revendication 13 lorsqu'elle dépend de la revendication 12 dans lequel la plaque est une plaque de refroidissement (68) et comporte la surface de refroidissement.

15. Système de boissons pour fournir une variété de types différents de boissons nécessitant des mélanges respectifs de composants, le système comportant un dispositif de boissons (2) selon l'une quelconque des revendications 11 à 14 et au moins un conteneur de boissons (10) selon l'une quelconque des revendications 1 à 10.
